# EUROPEAN PATENT APPLICATION

(11) **EP 1 550 539 A1**
(43) Date of publication of application: **06.07.2005**
(21) Application number: 03797545.5
(22) Date of filing: 03.09.2003
(51) Int. Cl.: B29C 33/38, B05B 15/04, B05D 1/32

(54) **METHOD FOR PRODUCING RESIN MASKING MATERIAL**

(30) Priority: 20.09.2002 JP 2002274913; 21.02.2003 JP 2003043953
(71) Applicant: Nagoya Oilchemical Co., Ltd., Tokai-shi, Aichi 476-0001 (JP)
(72) Inventor: OGAWA, Masanori, c/o Nagoya Oilchemical Co., Ltd., Tokai-shi, Aichi 476-0001 (JP); ITO, Kuninori, c/o Nagoya Oilchemical Co., Ltd., Tokai-shi, Aichi 476-0001 (JP)
(74) Representative: VOSSIUS & PARTNER
(86) International application number: PCT/JP2003/011272
(87) International publication number: WO 2004/026553

(57) **Abstract**

In the present invention, the production of the masking member can be started early, and the mold for the masking member, being highly accurate, can be manufactured in a short period of time, moreover the effects of said thermal contraction of the molded masking member can be modified precisely and easily in a short period of time, further shortening the production time of said masking member.

To obtain such object, the present invention provides a method for manufacturing a masking member(1) made of a thermoplastic resin, including; the preparation of mold using the CAD data relating to the design of the part(2) which is subject to masking, and the preparation of a thermoplastic resin mold with which to form a specific masking member to protect the area. Said masking member(1) is manufactured by vacuum and/or pressure forming a thermoplastic resin sheet, after which it is trimmed by a robot operated using the trimming position data obtained from the CAD data.

## Description

### FIELD OF THE INVENTION

The present invention relates to a masking member which is used to protect a part on which the coating should not effect (the part to be masked) during the coating of such as a car body, bumper, and the like.

### BACKGROUND OF THE INVENTION

When a car body or bumper is coated with paint, a masking member is used to protect the part which the coating should not effect (the part to be masked), said masking member commonly being a resin molded article.

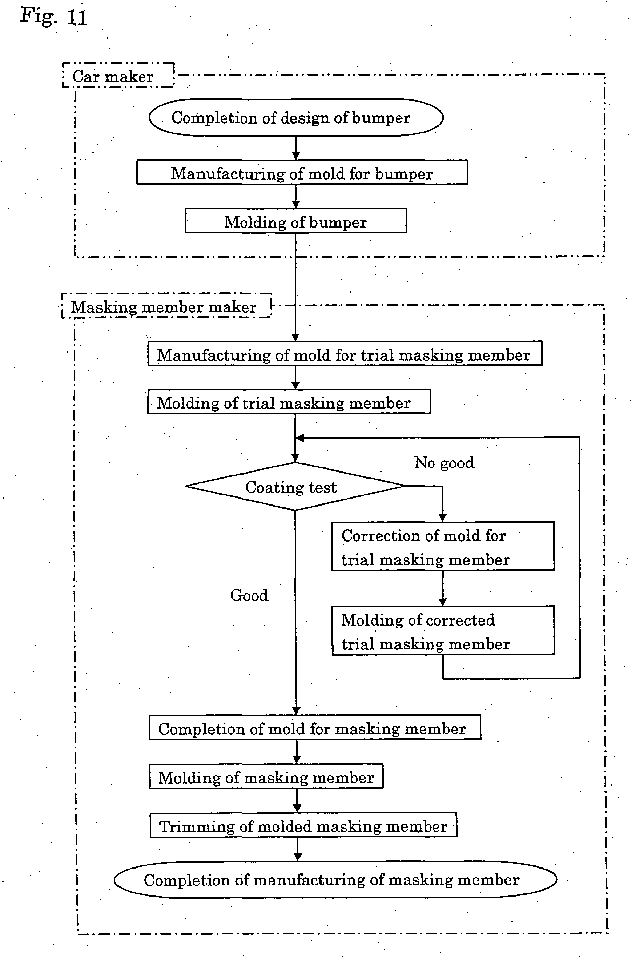

As shown is Fig.11, when a conventional masking member is made, the mold is based on the design of the part(s) to be masked, prepared by the car manufacturer, such as a bumper, or the like, after which said mold is used by the car manufacturer to create a resin molded article.

The maker of the masking member gets said actual bumper to which the masking member is to be applied, from the car manufacturer, and then produces a trial mold of said part to be masked for the masking member, such as the air intake of the bumper, by shaping gypsum to correspond to the form of said air intake of said actual bumper, after which, said trial mold is used to create a trial masking member, and a coating test is performed on the bumper to whose air intake said trial masking member is attached.

Following this, and being based on the test results, the maker then produces a modified trial mold, and molds a modified trial masking member using said modified trial mold, and again performs a coating test on the bumper to whose air intake said modified trial masking member is attached. Said trial process may be repeated a few times until a good test result is obtained to complete a final mold that can be used to form said masking member, after which the resulting new masking member is then trimmed and completed.

In this case, the production of the masking member is commonly performed by applying vacuum and/or pressure forming, using a resin sheet. Since the circumference of the masking member forms a dividing line between the part being coated, and the part to be masked during the coating; very high accuracy is required in the trimming of the circumference of the new masking member.

Therefore, the trimming process of the new masking member after molding, especially in a case where said masking member has a complex and three-dimensional shape, is commonly performed by the hand of a highly skilled worker using scissors or the like.

### DISCLOSURE OF THE INVENTION

However, in said traditional process, the maker of the masking member can not produce a trial mold for said masking member until the car manufacturer makes the actual parts to which the masking member is to be applied, said actual parts may be such as a bumper, or the like, leading to concerns regarding delays in the preparation and production of the masking member.

Further, when the shaping of the resin bumper is performed using gypsum, there is concern that the resin bumper will be slightly deformed by the weight of said gypsum, resulting in inaccuracies in said trial mold, and in a case where the accuracy of the trial mold is low, good results in the coating test can not be ensured, so that the resulting trial mold should be modified and a modified trial masking member should be modified again, and followed by a further coating test; with said trial process being repeated a few times, for instance, in the case of a masking member to protect the air intake of the bumper, said trial process should be repeated four or five times.

Accordingly, a very long time, and a great deal of effort are necessary until a final mold is completed.

Further, in a case where the shaping is performed using gypsum, the roughness of the surface of the resulting mold will be noticeable, and it is feared that the roughness of the surface of the resulting masking member, formed using said mold, will also be obvious.

Still further, since the resin masking member is deformed by thermal contraction, a modification to counteract this has been attempted by producing a mold having a slightly larger size than that prescribed, by using the expandable gypsum when the mold is produced, however precise modification is difficult in a case where expandable gypsum is used, so that intense labor and a long time are necessary to render precise modifications, and still further, in a case where the masking member has a complex and three-dimensional shape, and since the molded masking member is trimmed by hand, there is a problem in that a long time and intense labor are necessary, and that highly accurate trimming will be enormously difficult. For said trimming to have a high accuracy, the use of a trimming robot has been considered, but for robotic trimming, the trimming position data should be input into the robot, the problem being that an enormous amount of time and intense labor are necessary in order to determine and enter said trimming position data.

Still further, in a case where the trimming of the masking member is performed by hand using the scissors, a thready splinter will be formed along the cutting line of the masking member, the concern being that when the masking member having said splinter is used in the coating process, the paint sticking to said splinter will contaminate the masked part, resulting in a masking defects. To prevent said problem, the removal of said splinter is necessary after trimming, meaning that enormous trouble and labor are necessary.

To solve the aforementioned problems, the present invention provides a method for manufacturing a masking member(1) made of a thermoplastic resin comprising ; the preparation of a mold using the CAD data relating to the design of the part(2) which is subject to masking, and the preparation of a thermoplastic resin mold with which to form a specific masking member to protect said area(3).

Said masking member(1) is preferably to be manufactured by vacuum and/or pressure forming a thermoplastic resin sheet.

Furthermore, said masking member(1) is preferably trimmed by a robot(4) operated using the trimming position data obtained from said CAD data after the molding of said masking member.

Further said making member(1) is preferably fixed to, and trimmed on a jig having a surface shape(5) corresponding to that of said masking member(1).

In this case, said masking member(1) is preferably fixed to said jig(5) by vacuum suction. Alternatively, said masking member(1) is preferably fixed to said jig(5) magnetically, or said masking member(1) is preferably fixed to said jig(5) with adhesive tape(16).

Still further, said masking member(1) is preferably trimmed with an ultrasonic vibration knife(14), or said masking member is preferably trimmed with a water jet cutter.

By applying this method for the manufacturing of said resin masking member, and since said resin masking member(1) is produced using the CAD data relating to the design of the article for which the masking member is used, the production of the trial mold for said masking member(1) can be started when the design of said article(2) is complete, so that the production of the masking member can start early.

Further, since the mold for the masking member(1) is manufactured using the CAD data and without the use of gypsum, the mold will have a smooth surface, and a high level of accuracy can be ensured, so that a good coating test result is guaranteed, making a repeated trial process wherein the trial mold is modified and then molded to conduct a further coating test unnecessary, resulting in the final mold's production time being cut to a relatively short period.

Further, since the mold for said masking member(1) is produced using said CAD data, the addition of the calculated thermal contraction ratio after molding to said CAD data will enable the precise modification of the effect of the masking member's thermal contraction after molding, and said modification can be performed in a short time.

Still further, in a case where said resin masking member is trimmed by a robot(4), and said robot(4) is operated using the trimming position data obtained from said CAD data, the determination of said trimming position data is unnecessary, resulting in said trimming being highly accurate, and possible in a short time, with minimal labor, even in a case where said masking member having a complex and three-dimensional shape after molding.

### BRIEF DESCRIPSION OF THE DRAWINGS

Figs.1 to 8 show an embodiment of the present invention.

Fig.1 is a flowchart illustrating the process from the completion of the designing of the bumper to the completion of the manufacturing of the masking member.

Fig.2 is a front view of a bumper.

Fig.3 is a top view of a masking member.

Fig.4 is a front view of a masking member attached to a bumper.

Fig.5 is a sectional side view of a masking member attached to a bumper.

Fig.6 is an explanatory sectional side view of a masking member set on a resin jig for trimming.

Fig.7 is an explanatory top view of a resin jig for trimming settled on a turntable.

Fig.8 is an explanatory side view of a masking member which is trimmed.

Fig.9 is an explanatory sectional side view of a masking member set on a resin jig for trimming in another embodiment.

Fig.10 is an explanatory sectional side view of a masking member set on a resin jig for trimming in still another embodiment.

Fig.11 is a flowchart illustrating the process from the completion of the designing of the bumper to the completion of the manufacturing of a masking member in the prior art.

### DESCRIPTION OF NOTATIONS

1. resin masking member
2. bumper (article on which masking member is to be used)
3. air intake (part to be masked)
4. robot
5. jig for trimming
6. supersonic wave vibration knife

### DETAILED DESCRIPTION AND PREFERRED EMBODIMENT OF THE INVENTION

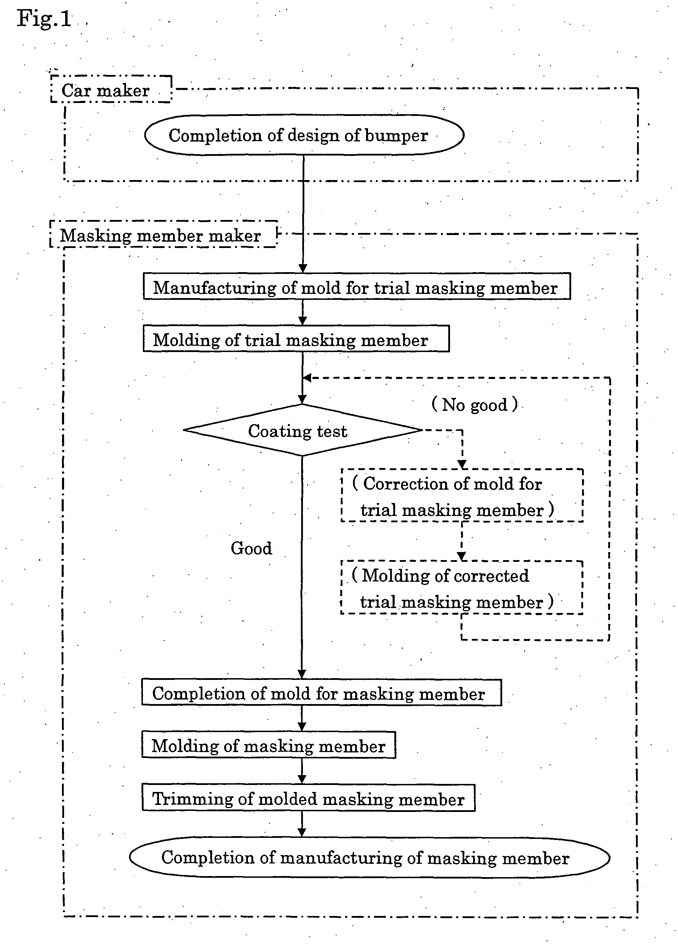

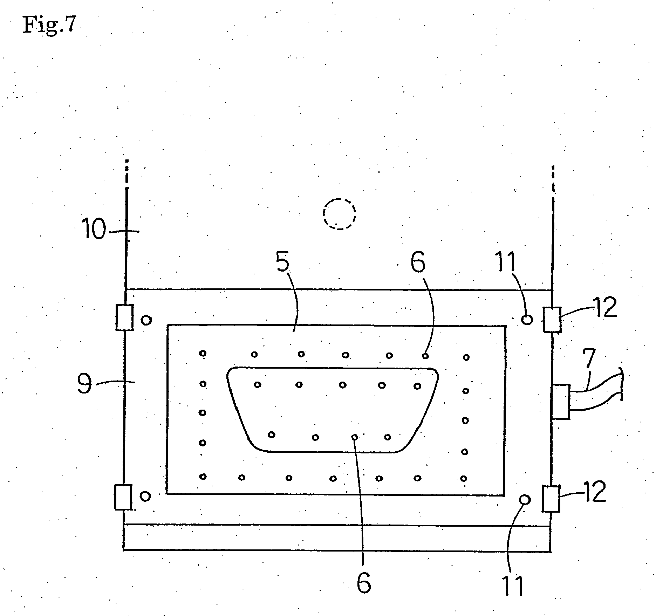

The present invention is described referring to the embodiment in Figs. 1 to 8.

In this embodiment, a case of the manufacturing of a resin masking member(1) to protect the air intake (3) of a bumper (2) of a car is illustrated.

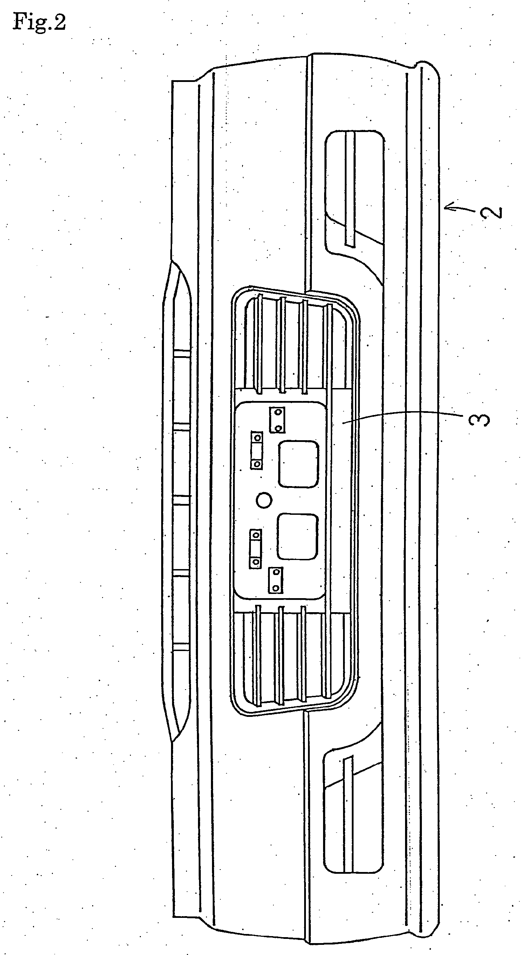

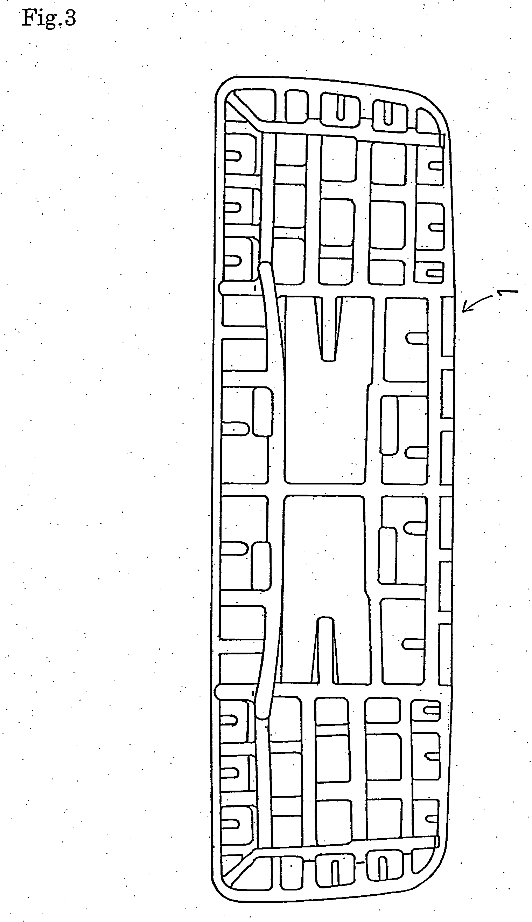

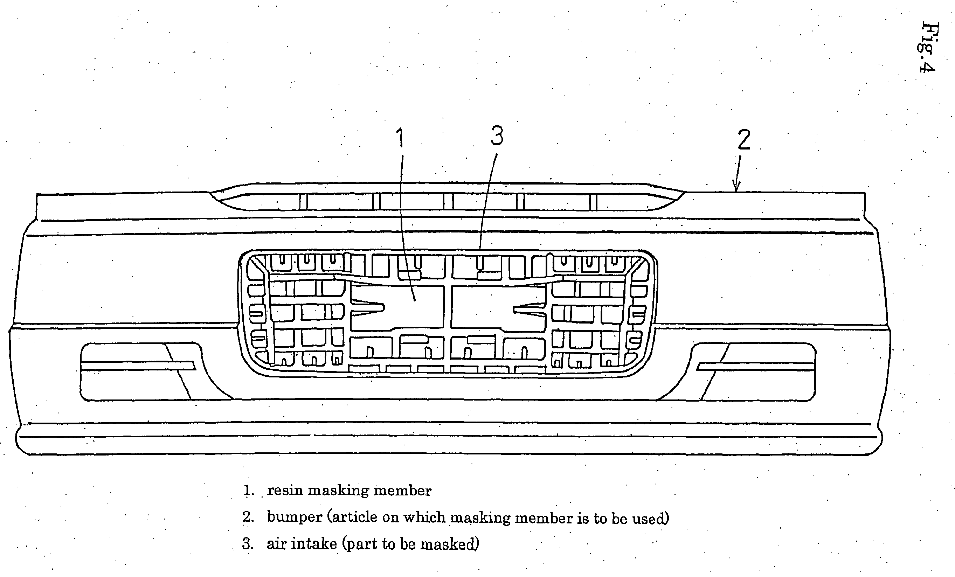

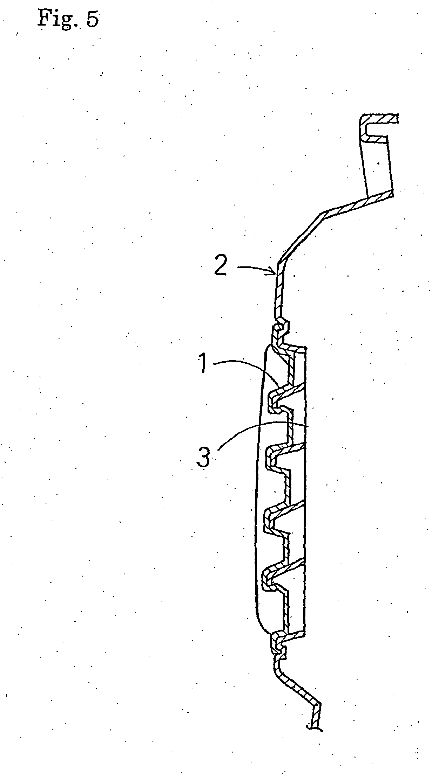

As shown in Fig.1, when the car manufacturer has completed the design of said bumper (2) (see Fig.2), the car manufacturer gives the relevant CAD data relating to the design of said bumper(2) to a masking member maker, after which said masking member maker makes a trial resin mold of said masking member(1), using an NC-controlled resin mold tooling machine. Said masking member maker molds a trial masking member(1) from a resin sheet using the resulting trial resin mold by vacuum forming (see Fig.3), and then performs the coating test after attaching said resin mold to said air intake(3) of said bumper(2) (see Figs.4 and 5).

If an undesirable result is obtained in said coating test, a further modified trial resin mold is made based on the test results and a modified trial masking member is molded using said modified trial resin mold. The resulting modified trial masking member is then attached to said air-intake (3) of said bumper (2), and the coating test is again performed. This trial process may be repeated a few times, until the desirable results are obtained.

When the desirable results are obtained, and a final mold is completed, the masking member(1) product is then molded from the resin sheet by vacuum forming using said mold, after which annealing treatment is then effected on the resulting new masking member, after which said new masking member is trimmed by a robot(4), using the trimming position data obtained from said

CAD data.

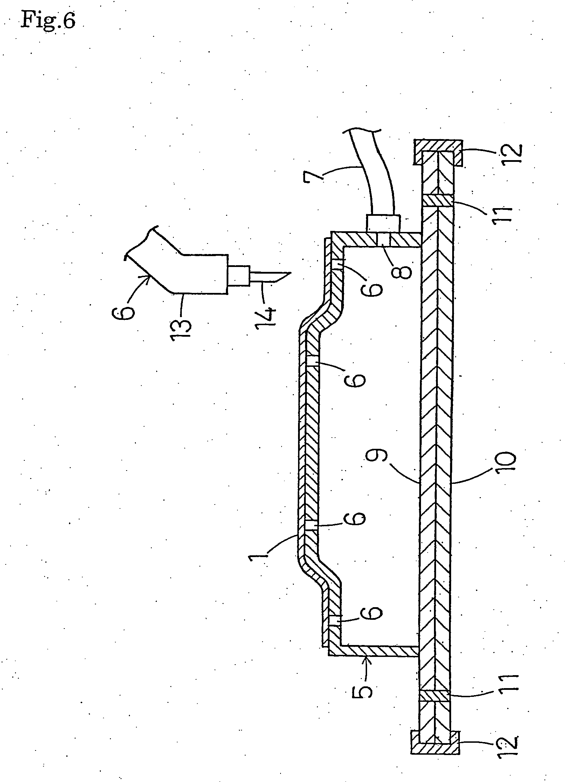

As shown in Figs. 6 to 8, when the trimming process is carried out by said robot(4), at first, following the post molding annealing treatment, said new masking member(1) is set on a resin jig(5) for trimming.

Said resin jig(5) is manufactured based on said CAD data, and the shape of the upper face of said resin jig(5) is set to correspond to the shape of said new masking member(1) after its annealing treatment. A plural number of the suction openings (6) are formed at prescribed positions in the upper face of said resin jig(5), and a vent (8) is set at a prescribed position in the side of said resin jig(5), with an exhaust pipe(7) connecting said vent (8), and said exhaust pipe (7) connecting to a vacuum pump (not shown in Figure). Further, said resin jig (5) is set on a base board (9) and kept airtight, and said base board(9) is set on a turntable(10) with a metal fitting(12), the fitting position of said base board (9) being determined by a positioning pin (11) (seeFigs.6 and 7).

Furthermore, a supersonic wave vibration knife(14) is attached to the top of the arm(13) of said robot(4) to perform the trimming, a cooling device(not shown in Figure) being provided to cool said supersonic wave vibration knife (14)(See Fig.6).

When said new masking member (1) upon which said annealing treatment has been effected after molding is trimmed by said robot(4), the air pressure in the space between said resin jig (5) and said base board (9) is lowered by vacuum pump, fixing said new masking member (1) to said resin jig (5) through the atmospheric pressure difference produced in the part of said suction opening (6), after which said new masking member being set on said resin jig (5) is trimmed by operating said supersonic wave vibration knife(14) attached at the top of said arm (13) of said robot (4) according to the trimming position data from said CAD data.

During said trimming, said supersonic wave vibration knife(14) is heated through vibrating, and said knife(14) is cooled by the cooling device arranged at the top of said arm(13) of said robot(4), maintaining said knife(13) at the proper temperature.

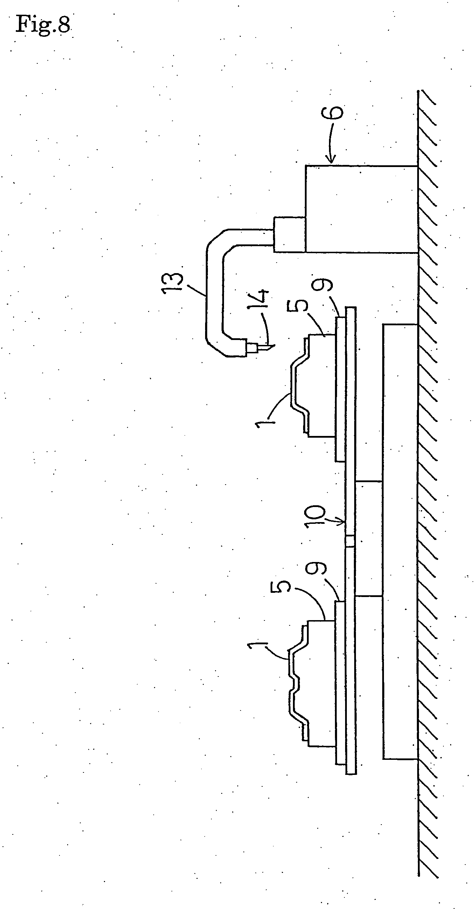

In this embodiment, since a pair of resin jigs(5) are set on said base boards(9) on a turntable(10) as shown in Fig.8, a process can be performed wherein one new masking member(1) on one of the resin jigs(5) is trimmed, setting the other new masking member on the other resin jig(5) after being annealed following molding, and after the trimming of one new masking member is completed, said turntable(10) is rotated 180 ° to remove said trimmed masking member from one resin jig(5), with the other new masking member(1) on the other resin jig(5) then being trimmed.

As described above, the production of one masking member(1) is completed after the trimming of said new masking member(1) having been annealed after the molding, by said robot(4) operated by the trimming position data obtained from said CAD data.

Said resin sheet, used in this process may be made of a thermoplastic resin such as polyethylene, polypropylene, ethylene-propylene copolymer, ethylene-vinyl actetate copolymer, polyvinyl chloride, polyvinylidene chloride, polystyrene, polyvinyl acetate, thermoplastic acrylic resin, thermoplastic polyester resin, thermoplastic polyamide resin, acrylonitrile butadiene copolymer, styren butadiene copolymer, acrylonitrile-butadiene-styrene copolymer (ABS), polyacetal, polycarbonate, polyethylene terephthalate(PET), polybutylene terephthalate(PBT), polysulfone(PSF), polyethersulfone(PES), polyphenylene ether(PPE), modified polyphenylene ether(Modified PPE), polyphenylene sulfide(PPS), polyarylate(PAR), polyether etherketone(PEEK), polyamide(PAI), polyimide(PI), polyetherimide(PEI), polyaminobismaleimide, methylpentene copolymer(TPX), or the like, or a mixture (including a polymer alloy) of two or more kinds of said thermoplastic resins.

As described above, since said resin masking member is manufactured using CAD data relating to the design of the bumper (2) of the car, the manufacturing of the trial mold for said masking member (1) can start when the design of the bumper(2) has been completed, so that the production of the masking member (1) can be easily started.

Further, since the mold for the masking member (1) is made using said CAD data, and without using gypsum, a mold having high accuracy and a smooth surface can be manufactured. Accordingly, a good coating test result can be ensured, without the need to repeat the trial process many times, wherein the trial mold is modified, then the modified trial article is molded, and the coating test is repeated, and even if necessary, said trial process is repeated once or twice at most, so that the final mold can be manufactured in a short period of time.

Further, since the mold for the masking member(1) is manufactured using said CAD data, modification of the effects of the thermal contraction of the molded masking member(1) and of the effects of said annealing treatment can be precisely and easily performed in a short time by calculating the coefficient of the thermal contraction after the molding of the masking member and the coefficient of the thermal contraction from the annealing treatment, to add to said CAD data.

Still further, in a case where said new resin masking member(1) is trimmed by the robot(4) operated using the trimming position data obtained from said CAD data after the molding of said resin masking member(1), since the determination of said trimming position data is not necessary, and even if said molded masking member(1) has a complex and three dimensional shape, the precise and accurate trimming can be performed quickly and easily .

Still further when said masking member(1) is trimmed, since said masking member(1) is set on the resin jig(5) for trimming, the jig(5)'s upper face having a shape corresponding to that of said masking member, said masking member(1) being sucked and fixed to said resin jig(5) by vacuum pump, lowering the air pressure in the space between said resin jig(5) and said base board(9), producing a difference between the air pressure in the space and the atmospheric pressure, movement of said masking member(1) during trimming is prevented, so that said trimming is highly accurate.

Still further, since said resin jig(5) for trimming is manufactured according to said CAD data, said resin jig(5) for trimming can be manufactured by modifying the design with a high degree of accuracy, and in a short time by calculating the value of the precise modification due to the effect of the thermal contraction of said molded masking member(1), and the effect of the contraction of the annealing treatment through the calculation of the coefficient of thermal contraction of the molded masking member and the coefficient of thermal contraction resulting from the annealing treatment, and by adding this to said CAD data.

Still further, since a process becomes possible wherein the trimming of one masking member(1) set on one resin jig(5), and the removal of the other masking member(1) from the other resin jig(5) can be performed at the same time, after which said turntable(10) can be rotated 180° to remove one masking member(1) from one resin jig(5), and to trim the other masking member(1) set on the other resin jig(5) simultaneously, the working efficiency of the trimming of the masking member(1) can be improved greatly by repeating said process.

In this case, by arranging a pair of different kinds of resin jigs(5) on either side of said turntable(10), two different kinds of masking member can be trimmed simultaneously.

Still further, since said resin jig(5) is fixed to said turntable(10), its position being determined using said positioning pin(11), through said base board(9), when said resin jig(5) set on said turntable(10) is removed to change from said turntable(10), the other masking member(1) can be correctly set in the same position(position re-productivity). Therefore, it is adequate to enter the trimming position data once only, so that the labor of resetting said trimming position data after changing said resin jig(5) is unnecessary, greatly shortening the time required for the trimming work.

Still further, since said robot(4) is operated based on the trimming data calculated by said CAD data, even if a shift in the trimming position is found, said shift can be easily corrected in a short time by correcting the trimming position data.

Still further, in a case where said masking member(1) is trimmed using the ultrasonic vibration knife(14), shear stress does not occur when said masking member(1) is trimmed, so that thready splinter in the cutting position does not form, preventing the masking defects due to said thready splinters. Further, since work to remove said splinter is unnecessary, time and labor can be greatly reduced.

The embodiment of the present invention is described above in the example. However, the scope of the invention is not limited only to this example, and any modification and/or alteration of this example can be performed according to the object, as to the scope of the invention described in Claims.

For instance, besides this example, said masking member(1) may be molded by pressure forming or vacuum-pressure forming in the mold, using a resin sheet, or further press molding or extrusion.

Further, depending on the kind of resin sheet being used in the present invention, the molded new masking member may be trimmed without the annealing treatment.

Still further, when the very good results are obtained from the coating test, the trial process, wherein the trial mold is modified, and the modified trial masking member is molded, followed by a further coating test, may be repeated once to produce the final mold, and further, when a positive coating test result is predicted, the final mold for the masking member(1) may be produced based on said CAD data, without the trial process from the production of the trial mold for the masking member(1) to the coating test.

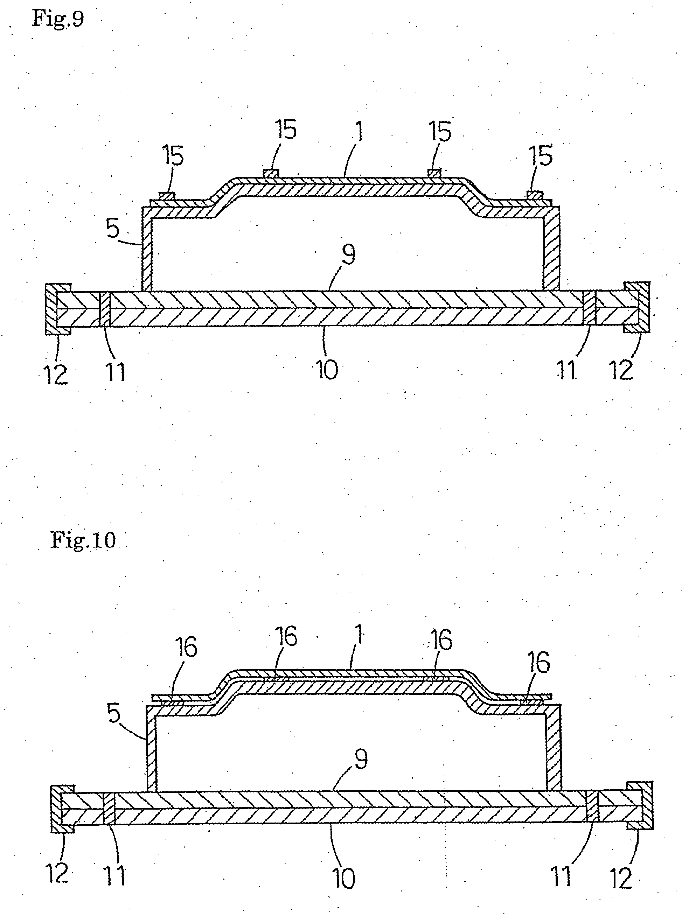

Still further, the resin coating layer(not shown in Figures) to which metal powder has been added, may be formed on the upper face of said resin jig(5) for trimming, and further, said jig may be made of a metal. In this case, the molded masking member(1) may be magnetically fixed to the jig for trimming by a plural number of magnets(15) as shown in Fig.9. Still further, said molded masking member(1) may be fixed to the jig using a plural number of the double bond tapes(16) as shown in Fig.10.

Still further, a water jet cutter(not shown in Figures) may be attached to the top of the arm(13) of the robot(4), and in this case, the masking member(1) may be trimmed with said water jet cutter.

### INDUSTRIAL UTILITY

In the present invention, the production of the masking member can be started early, and the mold for the masking member, being highly accurate, can be manufactured in a short period of time, moreover the effects of said thermal contraction of the molded masking member can be modified precisely and easily in a short period of time, further shortening the production time of said masking member.

## Claims

1. A method for the manufacturing of a masking member made of a thermoplastic resin, comprising ; the preparation of a mold using the CAD data relating to the design of the part which is subject to masking, and the preparation of a thermoplastic resin mold with which to form a specific masking member to protect said area

2. A method for the manufacturing of the thermoplastic resin masking member of Claim 1, wherein said masking member is manufactured by vacuum and/or pressure forming a thermoplastic resin sheet

3. A method for manufacturing a thermoplastic resin masking member of Claim 1 or 2, wherein said masking member is trimmed by a robot operated using the trimming position data obtained from said CAD data after the molding of said masking member

4. A method for manufacturing a thermoplastic resin masking member of Claim 3, wherein said masking member is fixed to, and trimmed on a jig having a surface shape corresponding to that of said masking member

5. A method for manufacturing a thermoplastic resin masking member of Claim 4, wherein said masking member is fixed to said jig by vacuum suction

6. A method for manufacturing the thermoplastic resin masking member of Claim 4, wherein said masking member is fixed to said jig magnetically

7. A method for manufacturing the thermoplastic resin masking member of Claim 4; wherein said masking member is fixed to said jig with adhesive tape

8. A method for manufacturing the thermoplastic resin masking member of Claims 1-7, wherein said masking member is trimmed with an ultrasonic vibration knife

9. A method for manufacturing the thermoplastic resin masking member of Claims 1-7, wherein said masking member is trimmed with a water jet cutter
